# EUROPÄISCHE PATENTSCHRIFT

(11) **EP 1 154 194 B1**
(45) Veröffentlichungstag und Bekanntmachung des Hinweises auf die Patenterteilung: **21.07.2004**
(21) Anmeldenummer: 01110197.9
(22) Anmeldetag: 08.05.2001
(51) Int. Cl.: F16L 55/26, F16L 55/44, F16L 55/162

(54) **Vorrichtung zum Reparieren unteriridisch verlegter Abwasserkannäle oder dergleichen sowie die Verwendung derartiger Vorrichtungen**
Device for repairing sewer pipes or similar and use of such device
Dispositif de réparation de canalisations d'égouts ou similaire, ainsi que l'utilisation d'un tel dispositif

(30) Priorität: 09.05.2000 DE 20008293 U
(43) Veröffentlichungstag der Anmeldung: 14.11.2001
(73) Patentinhaber: Janssen, Franz, 47574 Goch (DE)
(72) Erfinder: Janssen, Franz, 47574 Goch (DE)
(74) Vertreter: Gille Hrabal Struck Neidlein Prop Roos

(56) Entgegenhaltungen:
- EP-A- 0 683 347
- DE-A- 19 644 466
- DE-A- 19 960 832
- DE-U- 29 707 089
- US-A- 5 119 862

## Beschreibung

Die Erfindung betrifft eine Vorrichtung zum Reparieren unterirdisch verlegter Rohrleitungen wie Abwasserkanäle, das heißt im allgemeinen im Erdreich verlegter Rohrleitungen, die aus Material bestehen, welches nach langjährigem Gebrauch zum Reißen oder Brechen neigt, beispielsweise bei Abwasserkanälen. Außerdem betrifft die Erfindung Verwendungen derartiger Vorrichtungen.

Vorrichtungen dieser Art sind in den verschiedensten Ausführungen bekannt und ermöglichen, schadhafte Stellen im Bereich der Wände der unterirdisch verlegten rohrförmigen Kanäle zu reparieren und zu sanieren, ohne dass die schadhaften Stellen freigelegt werden müssen (vergl. DE-U-29707089, DE-A-19644466 und EP-A-0683347).

Schäden an unterirdisch verlegten Rohrleitungen wie Abwasserkanälen entstehen insbesondere auch im Bereich von Anschlüssen, die aus einzelnen Häusern in einen Sammelkanal münden. Auch für die Reparatur derartiger Schadstellen sind Vorrichtungen bekannt, welche an einem in den Abwasserkanal passenden aufblasbaren Hauptkörper einen von diesem abzweigenden Hilfskörper oder Nebenkörper aufweisen, der ebenfalls aufblasbar ist und an einer Anschlussstelle in einen Anschlusskanal eingeführt und in diesem aufgeblasen werden kann, um das zum Reparieren und Sanieren durch den Hauptkörper zugeführte Material, beispielsweise ein Zweikomponenten-Kunststoffgemisch, gezielt den Schadstellen zuführen zu können.

Als Reparaturmittel wird vorzugsweise ein Zweikomponenten-Kunststoff benutzt, dessen beide Komponenten erst unmittelbar vor Erreichen der zu sanierenden Schadstelle zusammengeführt werden, damit diese kurzfristig miteinander reagieren und dabei im Bereich der Schadstelle und dem diese umgebenden Erdreich aushärten können (EP-A-0683347).

Die für derartige Reparatur- und Sanierungsarbeiten bekannten Vorrichtungen sind zwar brauchbar und für die Praxis geeignet, verursachen jedoch verhältnismäßig hohe Herstellungs- und Betriebskosten.

Eine weiterhin bekannte Vorrichtung zum Reparieren von Rohrleitungen sieht vor, in die Rohrleitung an der zu reparierenden Stelle eine aufweitbare Manschette einzusetzen, auf deren Außenseite sich eine Zusammendrückbare Dichtung befindet, die sich dichtend an die Innenwand der zu reparierenden Rohrleitung anlegt (US-A-5119862). Die Manschette verbleibt dauerhaft in der Rohrleitung.

Der Erfindung liegt die Aufgabe zugrunde, eine vereinfachte und einfacher zu bedienende Vorrichtung zum Reparieren unterirdisch verlegter Abwasserkanäle oder dgl. zu schaffen, welche auch preiswerter herzustellen ist, ohne Einschränkungen bezüglich der Wirksamkeit und Einsetzbarkeit hinnehmen zu müssen.

Insbesondere soll durch die Erfindung eine Vorrichtung geschaffen werden, die zum Reparieren unterirdisch verlegter Abwasserkanäle im Bereich von Hausanschlüssen geeignet ist.

Diese Aufgabe wird erfindungsgemäß mit einer Vorrichtung gelöst, welche die Merkmale des Anspruches 1 aufweist.

Vorteilhafte Ausgestaltungen der Erfindung sind Gegenstand des Anspruches 2.

Außerdem werden erfindungsgemäß spezielle Verwendungen der erfindungsgemäßen Vorrichtung angegeben.

Die erfindungsgemäße Vorrichtung weist alle im Anspruch 1 enthaltenen Merkmale auf. Durch den elastisch dehnbaren, als Außenwand dienenden Mantel wird gewährleistet, dass die Vorrichtung eng an einem zu reparierenden Abwasserkanal anliegen kann. Punktuelles Aufliegen der Vorrichtung und damit verbundene Überbelastungen des Abwasserkanals werden dann vermieden. Ferner enthält eine im Querschnitt zylindrische Vorrichtung genug Platz zur Aufnahme weiterer Mittel, beispielsweise einem seitlich aus- und einfahrbaren Balg.

In einer vorteilhaften Ausgestaltung der erfindungsgemäßen Vorrichtung ist es möglich, das zum Reparieren und Sanieren verwendete Kunststoffmaterial, insbesondere ein Zweikomponenten-Material, der jeweiligen Reparaturstelle gezielt zuzuführen, ohne dass dieses Material in Bereiche eindringen könnte, welche von Abschnitten der Vorrichtung, die im Betriebszustand gedehnt sind, überdeckt sind.

Eine zu diesem Zweck beispielsweise vorgesehene Manschette bzw. gebogene Platte aus starrem Material ist in den dehnbaren Hohlkörper vorzugsweise eingelassen und macht somit dessen Dehnbewegungen zwar mit, liegt jedoch auch im gedehnten Hohlkörper so, dass zwischen dieser Manschette oder Platte und der jeweiligen Wand des zu reparierenden Kanals ein Hohlraum in einer Dicke der Wandstärke des dehnbaren Mantels des Hauptkörpers der Vorrichtung verbleibt, in welchen Reparaturmaterial eindringen und in diesem aushärten kann, ohne dass dieses ausgehärtete Material beim Entfernen der Vorrichtung aus dem Reparaturbereich, nachdem die Vorrichtung entspannt oder drucklos gestellt wurde, stören könnte.

Die im elastisch dehnbaren Hohlkörper der Vorrichtung vorgesehene plattenförmige Manschette ist zylinderförmig gebogen und etwa dem Durchmesser der jeweils zu reparierenden und sanierenden Abwasserkanäle angepasst. Diese Durchmesser können jedoch in gewissen Bereichen variieren, so dass die erfindungsgemäße Vorrichtung innerhalb bestimmter Bandbreiten für Abwasserkanäle unterschiedlicher Innendurchmesser angewendet werden kann, ebenso für die Reparatur im Bereich von Anschlussleitungen wie Hausanschlüssen unterschiedlicher Durchmesser.

Der in ein Anschlussrohr des Abwasserkanals einführbare, aufblasbare und elastisch dehnbare zylindrische Balg kann ganz in den Hauptkörper der Vorrichtung zurückgezogen werden, so dass er beim Bewegen der Vorrichtung innerhalb des zu reparierenden Abwasserkanals nicht stört und auch nicht zum Einsatz kommen muss, wenn die Vorrichtung zum Reparieren eines Abwasserkanals außerhalb eines Bereiches einer Anschlussstelle benutzt werden soll. Andererseits kann der zylindrische Balg, an dessen äußerem Ende sich vorzugsweise eine Fernsehkamera befindet, unterschiedlich tief in einen Anschlusskanal eingefahren werden, wie dies für die jeweils vorgesehene Reparatur oder Sanierung notwendig ist.

Bei der erfindungsgemäßen Vorrichtung weist der zylindrische Hohlkörper eine im Durchmesser verstellbare Mantelfläche auf. Dadurch wird erreicht, dass der Hohlkörper an unterschiedliche Innendurchmesser der Abwasserkanäle unter Beibehaltung seiner zylindrischen Form angepasst werden kann. Aufwendige bauliche Veränderungen zur Anpassung der Vorrichtung an unterschiedliche Durchmesser der Abwässerkanäle sind nicht notwendig.

Es sind Mittel vorgesehen, die ein Vergrößern des Durchmessers des Hohlkörpers bewirken. Beispielsweise kann dies durch eine mechanische oder hydraulische bzw. pneumatische Einrichtung bewirkt werden.

Der zylindrische Hohlkörper der erfindungsgemäßen Vorrichtung ist ein zylindrisch gebogenes Blech, wobei zwei Kanten des Bleches einander überlappen. Dadurch ergibt sich ein besonders preiswert herzustellender, zylindrischer Hohlkörper. Aufgrund der überlappend anliegenden Kanten behält er seine zylindrische Form bei, wenn der Durchmesser des Hohlkörpers verändert wird. Beispielsweise kann der Ursprungsdurchmesser des Hohlkörpers 33 cm betragen. Dieser kann dann zur Anpassung auf unterschiedliche Innendurchmesser von 35 bis 42 cm der Abwasserkanalrohre aufgeweitet werden. Die Vorrichtung ist daher ohne Austausch von Elementen flexibel einsetzbar.

Der Mantel des zylindrischen Hohlkörpers der erfindungsgemäßen Vorrichtung wird vorteilhaft durch zwei sich nahe den Stirnenden des zylindrischen Hohlkörpers befindliche, mit Druckluft ausdehnbare Bälge in seinem Durchmesser verändert. Dabei wirkt der elastische Mantel rückstellend auf die vorher vorgenommenen Veränderungen. Durch Anbringen der Bälge nahe den Stirnenden des zylindrischen Hohlkörpers wird erreicht, dass an diesen Stellen der Mantel des Hohlkörpers stärker an die Innenwände des Abwasserkanals angepresst wird und dort stärker abdichtend wirkt als im Mantelbereich zwischen den Bälgen. Dadurch kann Reparaturmaterial auch in den Bereich zwischen Mantel und Innenwand des Abwasserkanals gepresst werden, der sich bezüglich des Hohlzylinders zwischen den Mantelflächen befindet, die von den Bälgen an die Innenwand des Abwasserkanals gepresst werden.

Bei Verwendung von entsprechend flüssigem Reparaturmaterial kann so ein beschädigtes, rissiges Abwasserrohr nicht nur an der Austrittstelle des Reparaturmaterials auf der Mantelfläche des zylindrischen Hohlzylinders, sondern auf der gesamten umlaufenden, zwischen den Bälgen liegenden Mantelfläche des zylindrischen Hohlkörpers großflächig repariert werden. Üblicherweise wurde früher das Kanalrohr mit einer Spitzhacke zum Anschluss von Hausanschlüssen durchbrochen. Dadurch konnte es zu Haarrissen und daraus resultierenden späteren größeren Schäden der Kanalwandung kommen, die jedoch durch obige großflächige Reparaturmaßnahme behoben werden können.

Der zylindrische Hohlkörper der erfindungsgemäßen Vorrichtung enthält vorteilhaft einen oder mehrere, in axialer Richtung sich erstreckende kanalartige Durchlässe. Dadurch wird erreicht, dass der zylindrische Hohlkörper, wenn er in einen Abwasserkanal eingebracht wird, das im Kanal geführte Abwasser nicht aufstaut bzw. dessen Abfließen nicht unterbricht.

Die erfindungsgemäße Vorrichtung weist vorteilhaft mehrere Schläuche zur Zuführung eines aus mehreren Komponenten bestehenden Reparaturmaterials und einen Mischer zur Vermischung der Komponenten auf. Dadurch kann über die einzelne Schläuche jeweils eine Komponente des Reparaturmaterials zugeführt werden. Wird Reparaturmaterial verwendet, das erst bei Kontakt aller Komponenten aushärtet, kann durch die getrennte Zuführung in mehreren Schläuchen ein Aushärten in den Zuführungsmitteln und ein zeitaufwendiges Bergen, Zerlegen und Reinigen der Vorrichtung vor jedem Reparatureinsatz vermieden werden. Dies kann insbesondere dadurch erreicht werden, dass nach einem abgeschlossenen Misch- und Reparaturvorgang der Mischer und die Teile der Vorrichtung, die mit dem gemischten mehrkomponentigen Reparaturmaterial in Kontakt standen, durch einen kurzfristigen Durchlauf von nur einer Komponente des Reparaturmaterials "gereinigt" werden.

Bei der erfindungsgemäßen Vorrichtung ermöglicht der bei Bedarf in ein Anschlussrohr des Abwasserkanals einführbare, aufblasbare, elastisch dehnbare zylindrischen Balg vorteilhaft eine Eindringtiefe in das Anschlussrohr von wenigstens 50 cm. Dadurch wird erreicht, dass ein Schaden, der sich über den Anbindungspunkt eines Anschlussrohres hinaus in das Anschlussrohr hinein erstreckt, repariert werden kann. So kann auch beispielsweise eine erste oder sogar zweite leckende Verbindungsmuffe des Anschlussrohres mit saniert werden.

Die erfindungsgemäße Vorrichtung weist vorteilhaft eine oder mehrere Videokameras zur Überwachung und Steuerung auf. Beispielsweise ist eine Kamera in der Spitze des einführbaren, aufblasbaren, elastisch dehnbaren zylindrischen Balges montiert, um diesen vor ein Anschlussrohr zu positionieren und darin einführen zu können. Beispielsweise sind weitere Kameras so an den Stirnenden des Hohlzylinders angebracht, dass die gesamte Vorrichtung und eine laufende Sanierungsmaßnahme überwacht werden kann. Ein laufender Reparaturprozess kann, sobald übermäßiger Austritt von Reparaturmaterial über die eigentliche Reparaturstelle und die Vorrichtung hinaus ersichtlich wird, abgebrochen werden.

Die erfindungsgemäße Vorrichtung enthält vorteilhaft nahe den Stirnenden des zylindrischen Hohlkörpers zwei Blasen sowie eine zu diesen Blasen führende Druckluftzuleitung. Ferner kann eine Einrichtung zum Messen eines Druckabfalls im Bereich zwischen den aufgeblasenen Blasen vorgesehen sein.

Zum Messen des Druckabfalls kann eine weitere Druckluftleitung vorgesehen sein, die zwischen den beiden Blasen zur Außenseite des zylindrischen Hohlkörpers mündet. Wird Druckluft zugeführt, kann mit der Einrichtung zum Messen eines Druckabfalls festgestellt werden, ob der zwischen den Blasen befindliche Teil des Abwasserkanals undicht ist. Somit lässt sich eine Dichtigkeitsüberprüfung in etwa über die Länge der Vorrichtung durchführen. Ferner kann eine Überprüfung unmittelbar nach durchgeführter Reparatur vorgenommen werden, ohne dass die Vorrichtung geborgen und durch spezielle Druckmessvorrichtungen ersetzt werden muss.

Erfindungsgemäß wird ein aus zwei Komponenten bestehendes Harz verwendet, um einen sanierungsbedürftigen Abwasserkanal zu reparieren. Dabei sind die Komponenten so gewählt, dass diese separat nicht zur Aushärtung neigen. Bei Kontakt und vorzugsweise Vermischung dieser Komponenten kommt es zu einer kurzfristigen Aushärtungsreaktion der Mischung. Dadurch kann eine Aushärtung innerhalb der Vorrichtung vermieden werden. Da Wasser als Lösungsmittel vermieden wird, kann eine Reparatur auch in sehr feuchter, wässriger Umgebung, beispielsweise bei einem im Grundwasserbereich liegenden Abwasserrohr, ohne die Gefahr vorgenommen werden, dass es zu einem Auswaschen des Reparaturmaterials, wie es beispielsweise bei Mörtel der Fall wäre, kommt.

Vorzugsweise wird ein vor dem Aushärten dünnflüssiges, bei der Vermischung bzw. Aushärtung nicht zur Aufschäumung neigendes Harz, beispielsweise Silikatharz, verwendet. Durch ein nicht zur Aufschäumung neigendes Harz wird unkontrollierte Ausbreitung des Reparaturmaterials, beispielweise in abwasserführende Bereiche des Kanals, vermieden. Vor der Aushärtung dünnflüssiges Harz kann bei der Sanierung die Mantelfläche der Vorrichtung leicht umfließen und ermöglicht so eine großflächige Reparatur eines Abwasserkanals. Ferner dringt es leicht durch im zu sanierenden Abwasserkanal bestehende Ritzen in das umgebende Erdmaterial ein, um dort nach der Aushärtung neben der Sanierung des Kanals auch die Bettung des Kanals zu verbessern.

Die erfindungsgemäße Vorrichtung wird beispielsweise zum Sanieren von schadhaften Hausanschlusskanälen verwendet. Sie kann auch benutzt werden, um stillgelegte oder außer Betrieb genommene Hausanschlüsse vom öffentlichen Kanalnetz zu trennen oder zu verschließen. Bei der Verwendung der erfindungsgemäßen Vorrichtung ist ein kostenund zeitintensives Aufgraben des Straßen- und Gehwegbelages nicht notwendig. Ferner wird der Nachteil der mangelnden Dauerhaftigkeit von Verschlüssen durch aufgeblasene Rohrdichtkissen vermieden, indem der Verschluss durch aushärtendes Reparaturmaterial erreicht wird.

Die erfindungsgemäße Vorrichtung wird zur Reparatur mehrerer Stellen eines Abwasserkanals eingesetzt, ohne diese zwischen den einzelnen Reparaturvorgängen aus dem Abwasserkanal bergen zu müssen. Beispielsweise vermeidet die Verwendung eines Mehrkomponenten-Reparaturmaterials mit mehreren Zuführungsleitungen ein Bergen, Reinigen und eventuelles Zerlegen der Vorrichtung, um diese für einen nächsten Reparaturvorgang einsatzbereit zu machen.

In der Zeichnung sind Ausführungsbeispiele der erfindungsgemäßen Vorrichtung schematisch dargestellt, und zwar zeigt
- Fig. 1: eine schaubildliche Außenansicht einer ersten Ausführungsform der Vorrichtung im entspannten Zustand, in welchem diese in einen unterirdisch verlegten rohrförmigen Abwasserkanal eingeführt und in diesen in axialer Richtung verfahren werden kann, wobei der in ein Anschlussrohr des Abwasserkanals einführbare, aufblasbare, elastisch dehnbare zylindrische Balg in den Hauptkörper oder Hohlkörper der Vorrichtung vollständig eingefahren ist,
- Fig. 2: eine Ansicht der Vorrichtung wie in Fig. 1, wobei jedoch der in ein Anschlussrohr des Abwasserkanals einführbare, aufblasbare, elastisch dehnbare zylindrische Balg aus dem Hohlkörper der Vorrichtung ausgefahren ist, und zwar etwa auf seine maximale Länge,
- Fig. 3: eine Ansicht der Vorrichtung ähnlich wie in Fig. 2, wobei jedoch der elastisch dehnbare zylindrische Balg aufgeblasen gezeigt ist,
- Fig. 4: einen Längsschnitt einer abgewandelten Ausführungsform der erfindungsgemäßen Vorrichtung, wobei zum Aufspreizen und Dehnen des Mantels der Vorrichtung mit Druckluft aufblasbare Schläuche oder Blasen nahe den Enden der Vorrichtung angeordnet sind,
- Fig. 5: einen Querschnitt einer ähnlichen Ausführungsform wie in Fig. 4, wobei zum Spreizen und Dehnen der entspannt dargestellten Vorrichtung Druckluftzylinder vorgesehen sind, und
- Fig. 6: einen weiteren Querschnitt der Vorrichtung aus Fig. 5 in gedehnter und einen größeren Außendurchmesser aufweisender Position.

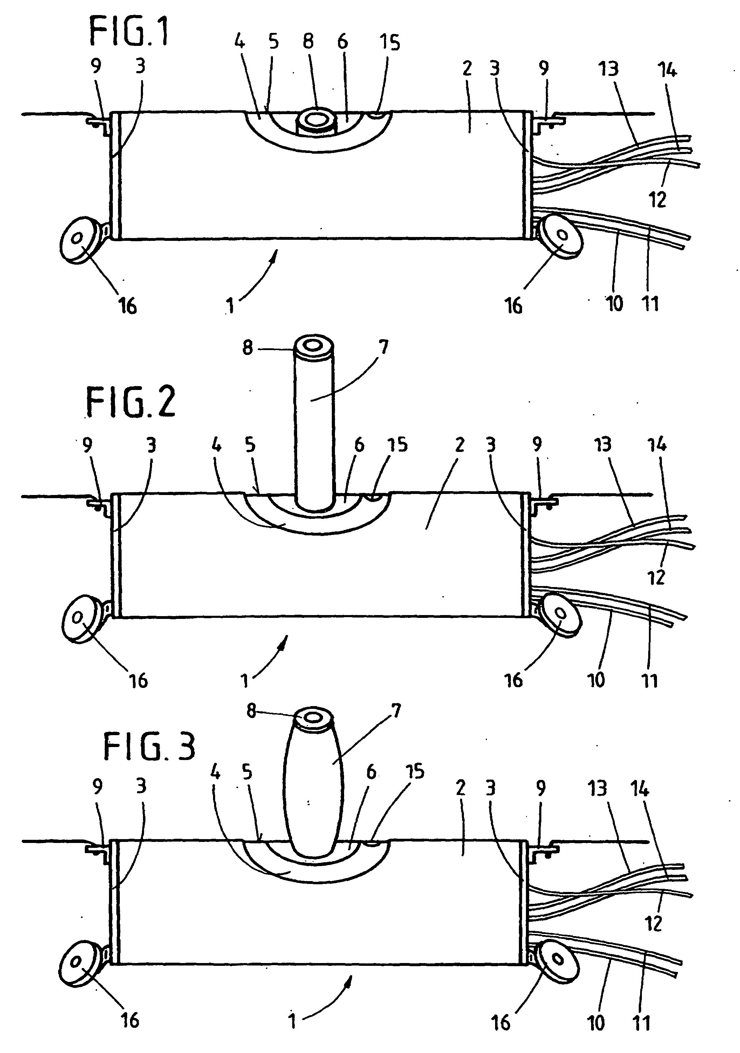

Da die in Fig. 1 bis 3 dargestellte erste Ausführungsform der erfindungsgemäßen Vorrichtung in der Zeichnung außerhalb eines rohrförmigen Abwasserkanals gezeigt ist, sind die Größenverhältnisse der Darstellung nicht denen gleich, die beim Einsatz in einem unterirdisch verlegten Abwasserkanal sich ergeben.

Die erfindungsgemäße Vorrichtung, welche zum Reparieren unterirdisch verlegter Abwasserkanäle oder ähnlicher Rohrleitungen geeignet ist, weist als Hauptkörper einen zylindrischen Hohlkörper 1 auf, der mit einem weitgehend als Außenwand dienenden elastisch dehnbaren Mantel 2 versehen ist. Die beiden Enden des Mantels 2 sind bei dieser Ausführungsform jeweils mit einer kreisscheibenförmigen starren Platte 3 hermetisch verschlossen.

In den zylindrischen Hohlkörper 1 ist im mittleren Bereich desselben eine aus starrem Material wie Metall bestehende, im Grundriss kreisförmige, jedoch entsprechend der Zylinderform des Hohlkörpers 1 gebogene Platte oder Manschette 4 eingelassen, deren Außenseite um die Wanddicke des Mantels 2 nach innen zurückversetzt ist, so dass sich im Bereich dieser Platte oder Manschette 4 stets ein gegenüber der Außenseite des elastisch dehnbaren Mantels 2 zurückversetzter Hohlraum 5 befindet, in den zum Reparieren und Sanieren unterirdisch verlegter Abwasserkanäle verwendetes aushärtendes Material eindringen und sich in diesem ausbreiten kann, bevor es in die Sanierungsstelle selbst eindringt und dort erstarrt.

Im Zentrum der Platte oder Manschette 4 befindet sich eine Öffnung 6, durch welche ein elastisch dehnbarer zylindrischer Balg 7, der im Inneren des Hohlkörpers 1 auf einer nicht dargestellten Haspel aufgewickelt ist, bei Bedarf ausgefahren werden kann. Am ausfahrbaren äußeren Ende dieses Balges 7 befindet sich ein kreisförmiger starrer Abschluss 8, der eine Fernsehkamera enthält. Der Balg 7 ist vorgesehen, um Reparatur- und Sanierungsarbeiten im Bereich eines in den Hauptkanal mündenden Anschlusses wie eines Hausanschlusses vornehmen zu können, dessen Lage zuvor die im Abschluss 8 befindliche Kamera ermittelt hat.

Ein Vergleich der Fig. 2 und 3 zeigt, dass der elastisch dehnbare zylindrische Balg 7 im Betrieb aufgeblasen werden kann, um sich an die Innenwand des Hausanschlusses dichtend anzuschmiegen, damit zugeführtes Dichtungsmaterial gezielt an die zu reparierende Stelle geleitet und gelenkt wird. Fig. 3, welche den Balg 7 im aufgeblasenen Zustand außerhalb einer ihn an sich einengenden Rohrleitung, welche den Hausanschluss bildet, zeigt, lässt erkennen, dass der Balg 7 sich im aufgeblasenen Zustand im Bereich der Öffnung 6 weniger dehnt, so dass gerade im Anschlussbereich von in die Hauptleitung mündenden Rohrleitungen gezielt Reparaturmaterial in die zu sanierende unterirdisch verlegte Abwasserleitung bzw. deren Teile eingebracht werden kann.

Die kreisförmigen starren Platten 3 weisen jeweils einen Haken 9 auf, an den ein nicht dargestelltes Zugseil angeschlossen werden kann.

In die am - in der Zeichnung gesehenen - rechten Ende des Hohlkörpers 1 angebrachte starre Platte 3 münden zwei Leitungen 10 und 11 zum Zuführen und Abführen von Druckluft in bzw. aus dem zylindrischen Hohlkörper 1, wenn dieser sich in der durch die im Abschluss 8 befindliche Fernsehkamera ermittelten Betriebsposition befindet und aufgeblasen bzw. entspannt werden soll.

Außerdem mündet in die rechts gezeigte starre Platte 3 ein elektrisches Kabel 12, welches der in der Zeichnung nicht dargestellten Haspel die zum Aus- und Einrollen des Balges 7 erforderliche elektrische Energie zuführt.

Außerdem sind durch die in der Zeichnung rechts dargestellte starre Platte 3 zwei Schlauchleitungen 13 und 14 hindurchgeführt, welche an bzw. in einer Düse 15 münden und zum Zuführen von zwei miteinander reagierenden Komponenten eines Kunststoffgemisches dienen, die mittels der Düse 15 vermischt werden und aus dem Hohlkörper 1 in den Sanierungsbereich der hier nicht näher dargestellten unterirdisch verlegten Rohrleitungen austreten sollen.

An den beiden starren Platten 3 sind außerdem Rollen 16 gelagert, welche es ermöglichen, den zylindrischen Hohlkörper 1 im entspannten Zustand durch einen unterirdisch verlegten rohrförmigen Abwasserkanal zu verfahren, ohne dass der Hohlkörper 1 selbst mit der Innenwand dieser Rohrleitung in Kontakt treten müsste.

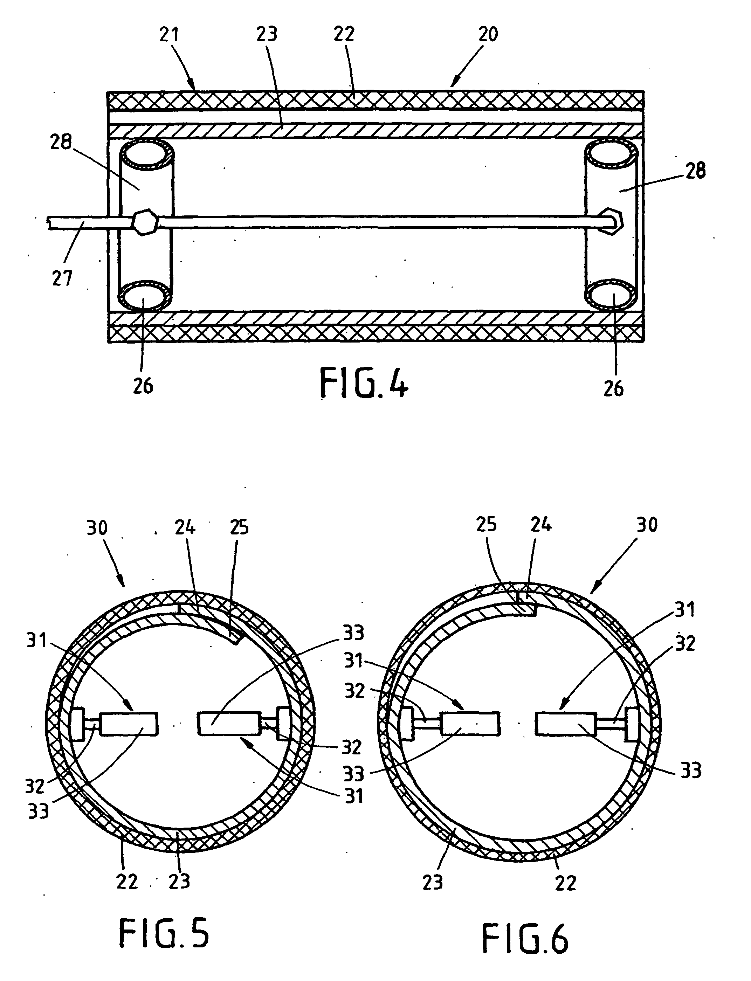

Die in Fig. 4 gezeigte Ausführungsform der erfindungsgemäßen Vorrichtung 20 weist einen zylindrischen Hohlkörper 21 auf, der einen äußeren elastisch dehnbaren Mantel 22 hat, in welchen eine zylindrisch gebogene Platte 23 aus im wesentlichen starrem Material wie Stahl eingebettet ist. Diese Platte 23 bildet einen entlang einer Mantellinie geteilten Zylinder, der von dem elastisch dehnbaren Mantel 22 derart zusammengedrückt wird, dass die Platte einander überlappende Enden 24 und 25 aufweist. Je nachdem wie stark der elastisch dehnbare Mantel 22, welcher beispielsweise aus Gummimaterial besteht, gedehnt ist, hat die Vorrichtung einen größeren oder kleineren Außendurchmesser, wie ein Vergleich von Fig. 5 und 6 zeigt.

Bei der Ausführungsform gemäß Fig. 4 sind nahe den offenen Enden des zylindrischen Hohlkörpers 21 in diesem dehnbare Blasen oder Schlauchkörper 26 angeordnet, die an eine Leitung 27 angeschlossen sind, durch welche Druckluft herangeführt oder auch abgeleitet werden kann. Je mehr die dehnbaren Schlauchkörper 26 mit Druckluft beaufschlagt werden, desto stärker drücken diese von innen auf die zylindrisch gebogene Platte 23 und vergrößern deren Außendurchmesser, wodurch auch der elastisch dehnbare Mantel 22 unter Verdünnung seines Querschnitts gedehnt wird, wie Fig. 6 zeigt.

Lässt der beispielsweise pneumatisch erzeugte Druck in den dehnbaren Schlauchkörpern 26 nach, drückt der elastisch dehnbare Mantel 22 die zylindrisch gebogene Platte 23 in deren Ausgangsposition zurück. Diese Position ist am besten aus Fig. 5 zu erkennen.

Die Schlauchkörper 26 sind ringförmig ausgebildet, sodass sie einen inneren freien Querschnitt 28 bzw. eine innere Öffnung 28 enthalten, durch welche Flüssigkeit wie Abwasser praktisch ungehindert hindurch fließen kann, damit die Vorrichtung 20 zum Sanieren von Abwasserkanälen oder unterirdisch verlegten Rohrleitungen auch benutzt werden kann, ohne den Betrieb des Abwasserkanals bzw. der Rohrleitung unterbrechen zu müssen.

Bei der Ausführungsform gemäß Fig. 5 und 6 sind anstelle der dehnbaren Schlauchkörper 26 zum Vergrößern des Außendurchmessers der Vorrichtung 30 Druckzylinder 31 angeordnet, die an eine nicht dargestellte Druckluftleitung angeschlossen sind. Je nachdem wie stark der Druck der zugeführten Druckluft ist, fahren die Druckstempel 32 der Druckzylinder 31 mehr oder weniger weit aus dem Zylindergehäuse 33 aus, sodass der Außendurchmesser der Vorrichtung 30 dem jeweiligen Innendurchmesser des zu reparierenden bzw. sanierenden Abwasserkanals bzw. der entsprechenden Rohrleitung angepasst werden kann.

Sowohl bei der Ausführungsform gemäß Fig. 4 als auch bei der Ausführungsform gemäß Fig. 5 und 6 ist der zylindrische Hohlkörper 21 an beiden Enden offen, sodass die Vorrichtung, die im übrigen wie in Fig. 1 bis 3 gezeigt ausgebildet sein kann, eingesetzt werden kann, ohne den Betrieb des Abwasserkanals, der zu reparieren bzw. zu sanieren ist, unterbrechen zu müssen, weil das Abwasser durch den Hohlkörper der Vorrichtung hindurchfließen kann.

## Patentansprüche

1. Vorrichtung zum Reparieren unterirdisch verlegter Rohrleitungen wie Abwässerkanäle, mit einem zylindrischen Hohlkörper (1; 21), der einen elastisch dehnbaren, als Außenwand dienenden Mantel (2; 22) aufweist, wobei im zylindrischen Hohlkörper (1; 21) ein bei Bedarf aus einer im Mantel des Hohlkörpers befindlichen Öffnung (6) ausfahrbarer und durch diese Öffnung zurückziehbarer aufblasbarer, elastisch dehnbarer zylindrischer Balg (7) gelagert ist, **dadurch gekennzeichnet, dass** der zylindrische Hohlkörper (21) einen im Durchmesser veränderbaren Mantel (22) in Form eines zylindrisch gebogenen Bleches (23), dessen beide Kanten (24; 25) einander überlappen, aufweist und dass Mittel (26; 31), die ein Vergrößern des Durchmessers des Hohlkörpers bewirken, vorgesehen sind.

2. Vorrichtung nach Anspruch 1, **dadurch gekennzeichnet, dass** zum Vergrößern des Außendurchmessers des Mantels (22) des zylindrischen Hohlkörpers (21) nahe den Stirnenden des Hohlkörpers in diesem mit Luftdruck ausdehnbare Schlauchköper oder Bälge (26) oder an eine Druckluftleitung angeschlossene Druckzylinder (31) vorgesehen sind.

## Claims

1. Device for reparing underground pipes, such as sewer pipes comprising a cylindrical hollow body (1; 21) including an elastically expandable casing (2; 22) serving as outer wall, wherein said cylindrical hollow body (1; 21) comprises an elastically expandable inflatable bellow (7) which may be drawn out through an opening (6) provided in the casing of the hollow body and drawn back through said opening,
**characterized in that**
said cylindrical hollow body (21) comprises a casing (22) the diameter of which may be varied, and having the shape of a cylindrically curved sheet metal (23) both edges (24; 25) of which overlap each other, and that there are provided means (26; 31) permitting to increase the diameter of the hollow body.

2. Device as defined by claim 1,
**characterized in that**
for increasing the outer diameter of the casing (22) of the cylindrical hollow body (21) expandable hose bodies or bellows (26) are arranged near the front ends of the hollow body and expandable in the latter by means of compressed air, or that pneumatic jacks (31) connected to a compressed-air piping are provided therein.

## Revendications

1. Dispositif de réparation de canalisations souterraines, telles que des canalisations d'égouts, comprenant un corps cylindrique creux (1; 21) équipé d'une enveloppe (2; 22) élastiquement expansible et formant la paroi extérieure de l'enveloppe, dans lequel le corps cylindrique creux (1; 21) comprend un soufflet cylindrique (7) gonflable et élastiquement dilatable et extensible en cas de besoin à travers une ouverture (6) prévue dans l'enveloppe du corps creux et rétractable à travers ladite ouverture,
**caractérisé en ce que**
le corps creux cylindrique (21) comprend une enveloppe (22) à diamètre variable sous forme d'une tôle cylindrique courbe (23) dont les deux bords (24; 25) se chevauchent, et qu'il est prévu des moyens (26; 31) permettant d'agrandir le diamètre du corps creux.

2. Dispositif suivant la revendication 1,
**caractérisé en ce que**
pour agrandir le diamètre extérieur de l'enveloppe (22) du corps creux cylindrique (21) il est prévu à proximité des extrémités avant du corps creux des corps tubulaires ou soufflets (26) dilatables dans ce dernier à l"air comprimé, ou à l'aide de vérins pneumatiques (31) connectés à une conduite d'air comprimé.
